# EUROPÄISCHE PATENTSCHRIFT

(11) **EP 3 259 498 B1**
(45) Veröffentlichungstag und Bekanntmachung des Hinweises auf die Patenterteilung: **12.12.2018**
(21) Anmeldenummer: 16701048.7
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051115
(87) Internationale Veröffentlichungsnummer: WO 2016/131598

(56) Entgegenhaltungen:
- DE-A1-102011 089 167
- DE-A1-102012 013 248
- DE-A1-102012 221 149

## Beschreibung

Die vorliegende Erfindung betrifft ein Doppelkupplungsgetriebe für ein Kraftfahrzeug gemäß dem Patentanspruch 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Die Axiallänge des Doppelkupplungsgetriebes hängt von der Anzahl von Zahnradsätzen oder Radebenen ab, die in der Axialrichtung hintereinander im Doppelkupplungsgetriebe angeordnet sind. Jede der Radebenen ist aus zumindest zwei Fest- und/oder Loszahnräder aufgebaut. Zwischen den Radebenen sind Schaltelemente angeordnet, bei deren Betätigung Vor- und Rückwärtsgänge schaltbar sind.

Ein Doppelkupplungsgetriebe weist über Schaltelemente schaltbare Zahnradsätzen auf, die genau acht Radebenen bilden. Die Radebenen sind jeweils einem ersten Teilgetriebe und einem zweiten Teilgetriebe zugeordnet. Jedes der Teilgetriebe weist je eine Eingangswelle sowie eine gemeinsame Abtriebswelle auf. Die zueinander koaxialen Eingangswellen sind über je eine lastschaltbare Kupplung alternierend aktivierbar, wobei dem ersten Teilgetriebe die geraden Vorwärtsgänge sowie dem zweiten Teilgetriebe die ungeraden Vorwärtsgänge zugeordnet sind, die bei einer Gangschaltung über die Schaltelement schaltbar sind. In dem gattungsgemäßen Doppelkupplungsgetriebe weist jede der Radebenen ein auf der jeweiligen Eingangswelle lose oder drehfest gelagertes Antriebszahnrad und ein damit kämmendes, auf der Abtriebswelle lose oder drehfest gelagertes abtriebsseitiges Zahnrad auf. Diese sind unter Bildung von Vorwärtsgängen mittels der Schaltelemente mit der Eingangswelle und/oder mit der Abtriebswelle kuppelbar oder davon abkuppelbar.

Aus der DE 10 2012 221 149 A1 ist ein Getriebe in Vorgelegebauweise bekannt. Aus der DE 10 2012 013 248 A1 ist eine Antriebsvorrichtung für Kraftfahrzeuge bekannt. Aus der DE 10 2011 089 167 A1 ist ein Doppelkupplungsgetriebe in Vorgelegebauweise bekannt.

Die Aufgabe der Erfindung besteht darin, ein Doppelkupplungsgetriebe bereitzustellen, dass bei einer baulich günstigen Konstruktion größere Freiheitsgrade in der Funktionalität (Schaltstrategie) und in der Auslegung der Gangstufen aufweist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 weist das Doppelkupplungsgetriebe zum Schalten der Vorwärtsgänge genau fünf in Axialrichtung beidseitig schaltbare Schaltelemente (SE-A bis SE-D sowie SE-F) und zumindest ein einseitig schaltbares Schaltelement (SE-E, SE-G) auf. Auf diese Weise ergibt sich eine kompakte Getriebestruktur, in der mit Hilfe der Schaltelemente bevorzugt genau 12 Vorwärtsgänge schaltbar sind. Von den insgesamt fünf beidseitig schaltbaren Schaltelementen sind bevorzugt die vier Schaltelemente (SE-A, SE-B, SE-D, SE-C) gemeinsam auf der Eingangsachse der beiden Eingangswellen angeordnet und ein Schaltelement (SE-F) auf der Abtriebswelle angeordnet. Das einseitig schaltbare Schaltelement (SE-E) und gegebenenfalls auch das einseitig schaltbare Schaltelement (SE-G) können gemeinsam auf der Abtriebswelle angeordnet sein. In einer besonders bevorzugten Getriebestruktur können auf der Abtriebswelle zwei, maximal drei Schaltelemente (nämlich SE-F, SE-G und SE-E) angeordnet sein.

Bevorzugt kann die Getriebestruktur so ausgelegt sein, dass mit Hilfe der Schaltelemente insgesamt bevorzugt 8 Vorwärtsgänge jeweils Direktgang schaltbar sind, bei dem bei aktiviertem Teilgetriebe genau Radebene in den Momentenfluss geschaltet ist. Zusätzlich können bevorzugt in der Getriebestruktur nicht nur solche Direktgänge, sondern auch Verwindungs-Vorwärtsgänge (insbesondere 4 Verwindungs-Vorwärtsgänge, nämlich der 1., 2., 9. und 10. Gang) geschaltet werden. Bei jedem der Verwindungsgänge sind bei aktiviertem Teilgetriebe genau drei Radebenen in Reihe kombiniert in den Momentenfluss geschaltet. Die Radebenen bilden somit in Doppelfunktion sowohl Direkt-Vorwärtsgänge als auch Verwindungs-Vorwärtsgänge. Dem jeweiligen Verwindungs-Vorwärtsgang ist - im Unterschied zu den Direkt-Vorwärtsgängen - keine eigene Radebene zugeordnet, wodurch sich trotz einer Vielzahl von schaltbaren Vorwärtsgängen die Getriebe-Baulänge in der Axialrichtung reduziert, und zwar im Vergleich mit einem Doppelkupplungsgetriebe, bei dem die 12 Vorwärtsgänge lediglich als Direkt-Vorwärtsgänge schaltbar sind.

Die erfindungsgemäße Getriebestruktur kann dabei so ausgelegt sein, dass zur Gangstellung der Vorwärtsgänge bevorzugt genau zwei der Schaltelemente (SE-A bis SE-F) betätigbar sind.

Jede Eingangswelle des Doppelkupplungsgetriebes weist genau ein beidseitig schaltbares Schaltelement (zum Beispiel eine Doppelsynchronkupplung) auf. Mittels des ersten Schaltelements (SE-C) wird die erste Eingangswelle mit ersten bis vierten Radebenen des ersten Teilgetriebes gekuppelt oder davon abgekuppelt. Mittels des zweiten Schaltelements (SE-A) wird dagegen die zweite Eingangswelle mit den fünften bis achten Radebenen des zweiten Teilgetriebes gekuppelt oder davon abgekuppelt.

In diesem Fall tragen die beiden koaxialen Eingangswellen nicht mehr Festzahnräder, sondern lediglich die beiden ersten und zweiten Schaltelemente. Dadurch können die Eingangswellen im Vergleich zum obigen Stand der Technik wesentlich materialreduzierter ausgelegt werden. Zudem können mittels der ersten und zweiten Schaltelemente (SE-C und SE-A) Radebenen im jeweils aktivierten Teilgetriebe zumindest teilweise vom Momentenfluss abgekoppelt werden (das heißt stillgelegt werden), wodurch das Trägheitsmoment des aktivierten Teilgetriebes reduzierbar ist. Dies führt bei einem Schaltvorgang zu einer Verkürzung von Schaltzeiten bzw. zu einer Reduzierung des für den Schaltvorgang erforderlichen Energieaufwandes.

Das im ersten Teilgetriebe angeordnete erste Schaltelement (SE-C) kann entweder an ein, auf der ersten Eingangswelle gelagertes antriebsseitiges Loszahnrad einer ersten Radebene oder an eine, auf der ersten Eingangswelle koaxial gelagerte, antriebsseitige Hohlwelle gekuppelt werden. Die auf der ersten Eingangswelle drehgelagerte, antriebsseitige Hohlwelle kann zwei antriebsseitige Festzahnräder tragen, die jeweils einer zweiten Radebene und einer dritten Radebene zugeordnet sind.

In einer technischen Umsetzung kann auf der antriebsseitigen Hohlwelle des ersten Teilgetriebes zusätzlich ein antriebsseitiges Zahnrad einer vierten Radebene lose gelagert sein. Das antriebsseitige Zahnrad der vierten Radebene kann über ein drittes Schaltelement (SE-D) an die antriebsseitige Hohlwelle des ersten Teilgetriebes kuppelbar sein.

Dem zweiten Teilgetriebe ist eine, an dem ersten Teilgetriebe in der Axialrichtung unmittelbar angrenzende fünfte Radebene zugeordnet. Die fünfte Radebene weist ein antriebsseitiges Zahnrad auf, das auf der zweiten Eingangswelle drehbar gelagert ist und mittels des obigen dritten Schaltelementes (SE-D) an die antriebsseitige Hohlwelle des ersten Teilgetriebes kuppelbar ist. Auf diese Weise kann die fünfte Radebene entweder auf das erste oder auf das zweite Teilgetriebe geschaltet werden.

Wie oben erwähnt kann die zweite Eingangswelle genau ein zweites Schaltelement (SE-A) tragen, das zum Beispiel als eine Doppelsynchronkupplung ausgebildet ist. In diesem Fall können in der Axialrichtung des zweiten Schaltelementes im zweiten Teilgetriebe auf der einen Seite des zweiten Schaltelements ein auf der zweiten Eingangswelle gelagertes antriebsseitiges Loszahnrad der achten Radebene und auf der anderen Seite des zweiten Schaltelements eine auf der zweiten Eingangswelle koaxial gelagerte antriebsseitige Hohlwelle angeordnet sein. Die antriebsseitige Hohlwelle und das obige Loszahnrad der achten Radebene können (über das zweite Schaltelement SE-A) alternierend mit der zweiten Eingangswelle kuppelbar sein. Die antriebsseitige Hohlwelle des zweiten Teilgetriebes kann bevorzugt ein antriebsseitiges Festzahnrad der siebten Radebene tragen sowie ein antriebsseitiges Loszahnrad der sechsten Radebene tragen. Zum Schalten des antriebsseitigen Loszahnrads der sechsten Radebene kann die antriebsseitige Hohlwelle des zweiten Teilgetriebes ein viertes Schaltelement (SE-B) aufweisen, mit dem im zweiten Teilgetriebe das losgelagerte antriebsseitige Zahnrad der sechsten Radebene mit der Hohlwelle kuppelbar ist. In einer bevorzugten Ausführungsvariante kann mittels des obigen vierten Schaltelementes (SE-B) zusätzlich auch das antriebsseitige, losgelagerte Zahnrad der auf beide Teilgetriebe schaltbaren fünften Radebene an die antriebsseitige Hohlwelle des zweiten Teilgetriebes gekuppelt werden.

In einer technischen Umsetzung ist die Abtriebswelle achsparallel zur Eingangswelle angeordnet. Bevorzugt können die abtriebsseitigen Zahnräder der ersten und zweiten Radebene im ersten Teilgetriebe drehfest auf einer Hohlwelle angeordnet sein, die koaxial auf der Abtriebswelle drehbar gelagert ist. Die Abtriebswelle kann zudem ein fünftes Schaltelement (SE-F) aufweisen, mittels dem im ersten Teilgetriebe alternierend die Hohlwelle oder ein abtriebsseitiges Zahnrad der dritten Radebene mit der Abtriebswelle kuppelbar ist.

In ähnlicher Weise wie im ersten Teilgetriebe können auch im zweiten Teilgetriebe die abtriebsseitigen Zahnräder der siebten und achten Radebene drehfest auf einer abtriebsseitigen Hohlwelle angeordnet sein, die koaxial auf der Abtriebswelle drehbar gelagert ist. Die im zweiten Teilgetriebe auf der Abtriebswelle drehgelagerte Hohlwelle kann mit Hilfe eines sechsten, einseitigen Schaltelementes (SE-E) mit der Abtriebswelle gekuppelt werden.

In einer nicht von der Erfindung umfassten Vergleichsform kann das abtriebsseitige Zahnrad der auf beide Teilgetriebe schaltbaren fünften Radebene als ein Festzahnrad drehfest auf der Abtriebswelle angeordnet sein. In diesem Fall würde im Fahrbetrieb die fünfte Radebene ständig mitdrehen und gegebenenfalls die Drehlager vorzeitig verschleißen. Vor diesem Hintergrund ist erfindungsgemäß das abtriebsseitige Zahnrad der fünften Radebene lose auf der Abtriebswelle gelagert und über ein siebtes Schaltelement (SE-G) an die Abtriebswelle kuppelbar.

Wie oben erwähnt, ist der Zahnradsatz der fünften Radebene entweder auf das erste Teilgetriebe oder auf das zweite Teilgetriebe schaltbar. Dadurch kann bei geringem getriebetechnischen Mehraufwand und ohne Verzicht auf den Vorteil der zugkraftunterbrechungsfreien Beschleunigung des Kraftfahrzeugs zumindest ein Vorwärtsgang übersprungen werden, also beispielsweise von einem ungeraden Vorwärtsgang verzögerungsfrei in den nächsten ungeraden Vorwärtsgang geschaltet werden. Insbesondere bei starken Motorisierungen des Kraftfahrzeugs und bei definierten Fahrbedingungen kann dies eine verbesserte, ohne Schaltverzögerungen ablaufende Beschleunigung und gegebenenfalls einen verbesserten Wirkungsgrad im Fahrbetrieb ermöglichen.

Besonders bevorzugt kann der, die fünfte Radebene bildende Zahnradsatz zumindest den 3. Vorwärtsgang des zweiten Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5. Gang zugkraftunterbrechungsfrei geschaltet werden kann.

Ist bei einer entsprechenden, getriebetechnischen Auslegung der besagte Zahnradsatz auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

In einer bevorzugten Ausgestaltung der Erfindung kann das Festzahnrad des auf beide Teilgetriebe schaltbaren, die fünfte Radebene bildenden Zahnradsatzes auf der gemeinsamen Abtriebswelle des Doppelkupplungsgetriebes angeordnet sein, während das korrespondierende, schaltbare Loszahnrad steuerungstechnisch einfach mit dem dritten Schaltelement (SE-D) des ersten Teilgetriebes (A) oder mit dem fünften Schaltelement (SE-B) des zweiten Teilgetriebes (B) kuppelbar ist. Die Schaltelemente können dabei Doppelkupplungen sein, mittels denen ein Zahnradsatz des einen Teilgetriebes oder der Zahnradsatz des anderen Teilgetriebes schaltbar ist.

In einer vorteilhaften Weiterbildung der Erfindung können bei einem 12-Gang-Getriebe durch Mehrfachnutzung der Zahnradsätze nur acht Gangebenen verwendet sein, wobei der gemeinsam genutzte, die fünfte Radebene bildende Zahnradsatz des zweiten Teilgetriebes dem ersten Teilgetriebe unmittelbar benachbart angeordnet ist. Das Doppelkupplungsgetriebe kann somit baulich relativ kurz und mit geringst möglichen Schaltelementen und Gangstellern ausgeführt sein.

Des Weiteren können dazu Festzahnräder mehrerer Rad- oder Gangebenen beider Teilgetriebe auf jeweils gemeinsamen Hohlwellen befestigt und diese auf der gemeinsamen Abtriebswelle drehbar gelagert sowie über Schaltkupplungen (das heißt Schaltelemente) mit der Abtriebswelle koppelbar sein.

Ferner können weitere Festzahnräder der Gangebenen auf einer Hohlwelle angeordnet sein, die auf der Eingangswelle des einen Teilgetriebes gelagert ist und die mittels einer Schaltkupplung mit dem besagten Zahnradsatz des anderen Teilgetriebes kuppelbar ist.

Schließlich können bei möglichst geringem, getriebetechnischen Aufwand die zwölf Vorwärtsgänge mittels fünf Doppelkupplungen und einer Einfachkupplung schaltbar sein, wobei vier Doppelkupplungen auf den, koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

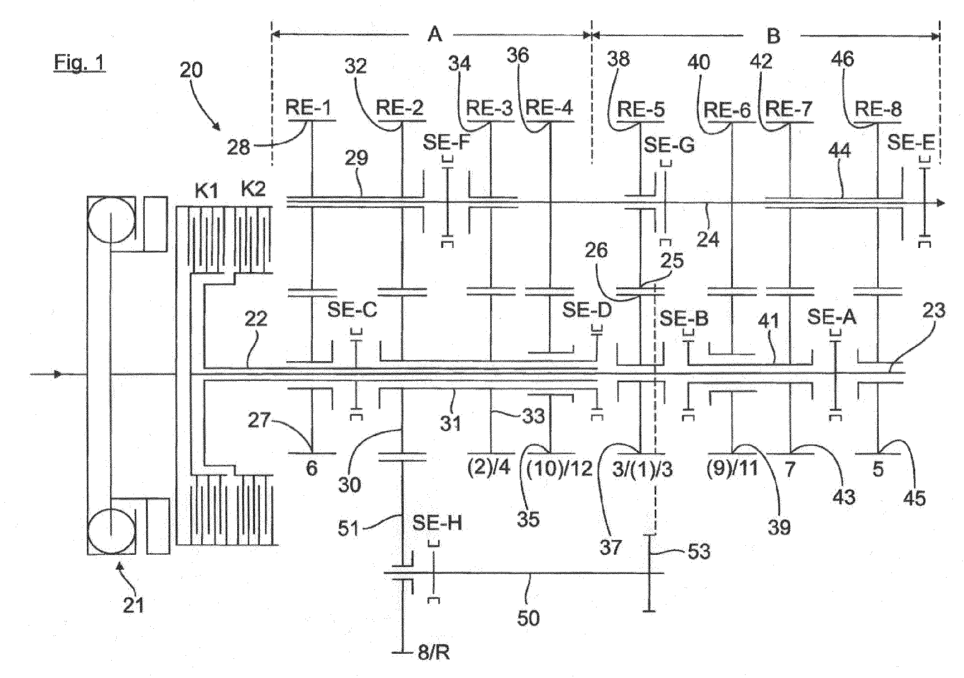

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (Ii) oder nach rechts (re) und die Schaltkupplung SE-E als eine Einfach-Synchronkupplung (Schaltstellung Ii) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

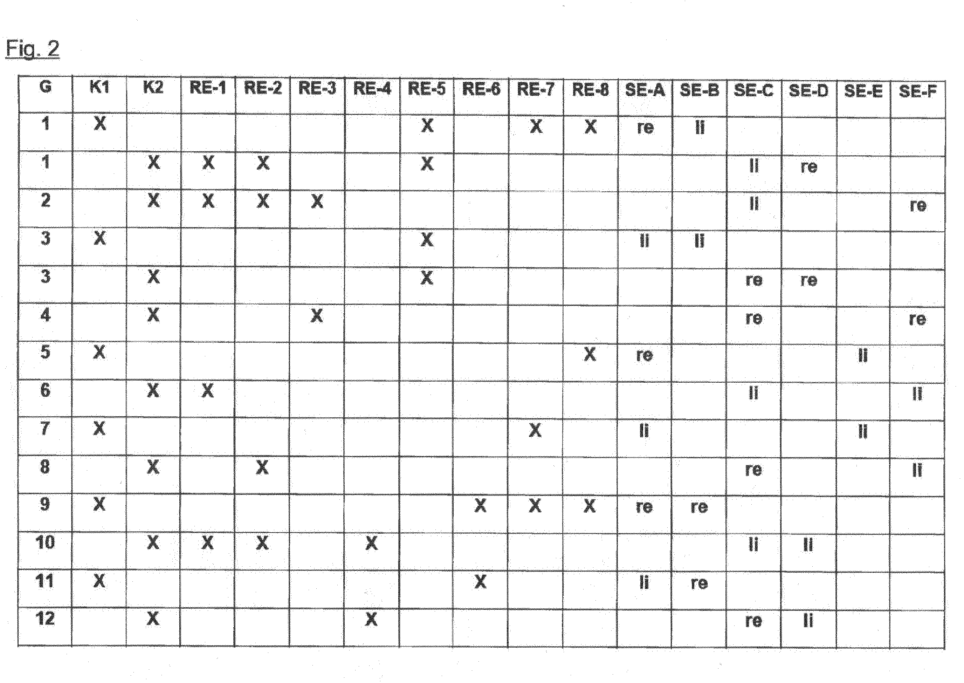

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (Ii) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) aufweist und das zweite Teilgetriebe (B) eine zweite Eingangswelle (23) aufweist, und beide Teilgetriebe (A, B) eine gemeinsame, zu den Eingangswellen (22, 23) achsparallele Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12) sowie dem zweiten Teilgetriebe (B) die ungeraden Vorwärtsgänge (1, 3, 5, 7, 9, 11) zugeordnet sind, die bei einer Gangschaltung über die Schaltelemente (SE-A bis SE-G) schaltbar sind, wobei jede der Radebenen (RE-1 bis RE-8) ein auf der jeweiligen Eingangswelle (22, 23) lose oder drehfest gelagertes Antriebszahnrad (27, 30, 33, 35, 37, 39, 43, 45) und ein damit kämmendes, auf der Abtriebswelle (24) lose oder drehfest gelagertes abtriebsseitiges Zahnrad (28, 32, 34, 36, 38, 40, 42, 46) aufweist, die unter Bildung von Vorwärtsgängen mittels Schaltelementen (SE-A bis SE-G) mit der jeweiligen Eingangswelle (22, 23) und/oder mit der Abtriebswelle (24) kuppelbar oder davon abkuppelbar ist, wobei das Doppelkupplungsgetriebe zum Schalten der Vorwärtsgänge genau fünf in Axialrichtung beidseitig schaltbare, erste bis fünfte Schaltelemente (SE-A bis SE-D, SE-F) und zumindest ein einseitig schaltbares, sechstes Schaltelement (SE-E, SE-G) aufweist, wobei die Eingangswellen (22, 23) frei von darauf angeordneten drehfesten Zahnrädern der Radebenen (RE-1 bis RE-8) sind, und wobei jede Eingangswelle (22, 23) genau ein in Axialrichtung beidseitig schaltbares Schaltelement (SE-C, SE-A) aufweist, und wobei mittels des ersten Schaltelements (SE-C) die erste Eingangswelle (22) mit den ersten bis vierten Radebenen (RE-1 bis RE-4) des ersten Teilgetriebes (A) kuppelbar oder davon abkuppelbar ist, und wobei mittels des zweiten Schaltelements (SE-A) die zweite Eingangswelle (23) mit den fünften bis achten Radebenen (RE-5 bis RE-8) des zweiten Teilgetriebes (B) kuppelbar oder davon abkuppelbar ist, wobei die auf beide Teilgetriebe (A, B) schaltbare fünfte Radebene (RE-5) mit ihrem antriebsseitigen Zahnrad (37) auf der zweiten Eingangswelle (23) lose gelagert ist und mittels des dritten Schaltelements (SE-D) an die antriebsseitige Hohlwelle (31) des ersten Teilgetriebes (A) kuppelbar ist, wobei das zweite Teilgetriebe (B) die, dem ersten Teilgetriebe (A) in Axialrichtung unmittelbar angrenzende fünfte Radebene (RE-5) aufweist, und wobei die fünfte Radebene (RE-5) mittels des dritten Schaltelements (SE-D) mit dem ersten Teilgetriebe (A) kuppelbar ist, und wobei das abtriebsseitige Zahnrad (38) der auf beide Teilgetriebe (A, B) schaltbaren fünften Radebene (RE-5) lose auf der Abtriebswelle (24) gelagert ist und über ein siebtes Schaltelement (SE-G) mit der Abtriebswelle (24) kuppelbar ist.

2. Doppelkupplungsgetriebe nach Anspruch 1, **dadurch gekennzeichnet, dass** mittels der Schaltelemente (SE-A bis SE-G) genau 12 Vorwärtsgänge schaltbar sind, und/oder dass von den fünf beidseitig schaltbaren Schaltelementen vier beidseitig schaltbare Schaltelemente (SE-A, SE-B, SE-D, SE-C) auf der Eingangsachse der Eingangswellen (22, 23) angeordnet sind und ein beidseitig schaltbares Schaltelement (SE-F) auf der Abtriebswelle (24) angeordnet ist, und dass das einseitig schaltbare Schaltelement (SE-E) auf der Abtriebswelle (24) angeordnet ist.

3. Doppelkupplungsgetriebe nach Anspruch 1 oder 2, **dadurch gekennzeichnet, dass** auf der Abtriebswelle (24) zumindest zwei, maximal drei Schaltelemente (SE-F, SE-G, SE-E) angeordnet sind.

4. Doppelkupplungsgetriebe nach Anspruch 2, **dadurch gekennzeichnet, dass** der 3. bis 8. sowie 11. und 12. Vorwärtsgang mittels der ersten bis siebten Schaltelemente (SE-A bis SE-G) jeweils als Direktgang schaltbar ist, bei dem bei aktiviertem ersten oder zweiten Teilgetriebe (A, B) genau eine Radebene in den Momentenfluss geschaltet ist, und dass der 1., 2., 9. und 10. Vorwärtsgang mittels der ersten bis siebten Schaltelemente (SE-A bis SE-G) jeweils als Verwindungsgang schaltbar ist, bei dem bei aktiviertem ersten oder zweiten Teilgetriebe (A, B) genau drei Radebenen in Reihe kombiniert und den Momentenfluss geschaltet sind.

5. Doppelkupplungsgetriebe nach einem der vorhergehenden Ansprüche, **dadurch gekennzeichnet, dass** zum Schalten der Vorwärtsgänge mindestens zwei der Schaltelemente (SE-A bis SE-G) betätigbar sind.

6. Doppelkupplungsgetriebe nach Anspruch 1, **dadurch gekennzeichnet, dass** in der Axialrichtung des ersten Schaltelements (SE-C) auf dessen einer Seite ein auf der ersten Eingangswelle (22) gelagertes, antriebsseitiges Loszahnrad (27) der ersten Radebene (RE-1) und auf der anderen Seite des ersten Schaltelements (SE-C) eine auf der ersten Eingangswelle (22) koaxial gelagerte antriebsseitige Hohlwelle (31) des ersten Teilgetriebes (A) angeordnet ist, die über das erste Schaltelement (SE-C) alternierend mit der ersten Eingangswelle (22) kuppelbar sind, und dass die antriebsseitige Hohlwelle (31) des ersten Teilgetriebes (A) ein Festzahnrad (30) der zweiten Radebene (RE-2) und ein Festzahnrad (33) der dritten Radebene (RE-3) trägt.

7. Doppelkupplungsgetriebe nach Anspruch 6, **dadurch gekennzeichnet, dass** auf der antriebsseitigen Hohlwelle (31) des ersten Teilgetriebes (A) ein antriebsseitiges Zahnrad (35) der vierten Radebene (RE-4) lose gelagert ist, und dass die antriebsseitige Hohlwelle (31) über das dritte Schaltelement (SE-D) mit dem losgelagerten antriebsseitigen Zahnrad (35) der vierten Radebene (RE-4) kuppelbar ist.

8. Doppelkupplungsgetriebe nach einem der vorhergehenden Ansprüche, **dadurch gekennzeichnet, dass** in der Axialrichtung des zweiten Schaltelements (SE-A) des zweiten Teilgetriebes (B) auf der einen Seite des zweiten Schaltelements (SE-A) ein auf der zweiten Eingangswelle (23) gelagertes, antriebsseitiges Loszahnrad (45) der achten Radebene (RE-8) und auf der anderen Seite des zweiten Schaltelements (SE-A) eine auf der zweiten Eingangswelle (23) koaxial gelagerte antriebsseitige Hohlwelle (41) des zweiten Teilgetriebes (B) angeordnet ist, und dass das Loszahnrad (45) der achten Radebene (RE-8) und die antriebsseitige Hohlwelle (41) des zweiten Teilgetriebes (B) über das zweite Schaltelement (SE-A) alternierend mit der zweiten Eingangswelle (23) kuppelbar sind, und dass die antriebsseitige Hohlwelle (41) des zweiten Teilgetriebes (B) zumindest ein Festzahnrad (43) der siebten Radebene (RE-7) trägt.

9. Doppelkupplungsgetriebe nach Anspruch 8, **dadurch gekennzeichnet, dass** auf der antriebsseitigen Hohlwelle (41) des zweiten Teilgetriebes (B) ein antriebsseitiges Zahnrad (39) der sechsten Radebene (RE-6) lose gelagert ist, und dass die antriebsseitige Hohlwelle (41) des zweiten Teilgetriebes (B) ein viertes Schaltelement (SE-B) aufweist, mit dem das losgelagerte antriebsseitige Zahnrad (39) der sechsten Radebene (RE-6) mit der antriebsseitigen Hohlwelle (41) des zweiten Teilgetriebes (B) kuppelbar ist.

10. Doppelkupplungsgetriebe nach Anspruch 9, **dadurch gekennzeichnet, dass** das antriebsseitige Zahnrad (37) der auf beide Teilgetriebe (A, B) schaltbaren fünften Radebene (RE-5) mittels des vierten Schaltelements (SE-B) mit dem zweiten Teilgetriebe (B) kuppelbar ist.

11. Doppelkupplungsgetriebe nach einem der vorhergehenden Ansprüche, **dadurch gekennzeichnet, dass** die abtriebsseitigen Zahnräder (28, 32) der ersten und zweiten Radebenen (RE-1, RE-2) des ersten Teilgetriebes (A) drehfest auf einer abtriebsseitigen Hohlwelle (29) des ersten Teilgetriebes (A) angeordnet sind, die koaxial auf der Abtriebswelle (24) drehbar gelagert ist.

12. Doppelkupplungsgetriebe nach Anspruch 11, **dadurch gekennzeichnet, dass** die Abtriebswelle (24) das fünftes Schaltelement (SE-F) aufweist, mittels dem im ersten Teilgetriebe (A) alternierend die abtriebsseitige Hohlwelle (29) oder ein abtriebsseitiges Zahnrad (34) der dritten Radebene (RE-3) mit der Abtriebswelle (24) kuppelbar ist.

13. Doppelkupplungsgetriebe nach einem der vorhergehenden Ansprüche, **dadurch gekennzeichnet, dass** die abtriebsseitigen Zahnräder (42, 46) der siebten und achten Radebenen (RE-7, RE-8) des zweiten Teilgetriebes (B) drehfest auf einer abtriebsseitigen Hohlwelle (44) des zweiten Teilgetriebes (B) angeordnet sind, die koaxial auf der Abtriebswelle (24) drehbar gelagert ist.

14. Doppelkupplungsgetriebe nach Anspruch 13, **dadurch gekennzeichnet, dass** die Abtriebswelle (24) das sechste Schaltelement (SE-E) aufweist, mittels dem die abtriebsseitige Hohlwelle (44) des zweiten Teilgetriebes (B) mit der Abtriebswelle (24) kuppelbar ist.

## Claims

1. Dual clutch transmission for a motor vehicle having gear sets switchable via switching elements, which form precisely eight wheel planes (RE-1 to RE-8) disposed one after the other in axial direction from the input side to the output side of the dual clutch transmission in the sequence first to eighth, which are assigned respectively to a first sub-transmission (A) and a second sub-transmission (B), of which the first sub-transmission (A) has a first input shaft (22) and the second sub-transmission (B) has a second input shaft (23), and both sub-transmissions (A, B) have a shared output shaft (24) being axis parallel to the input shafts (22, 23), wherein the input shafts (22, 23) coaxial to one another can be alternatingly activated via in each case one load-shiftable coupling (K1, K2), and the even forward gears (2, 4, 6, 8, 10, 12) are assigned to the first sub-transmission (A) and the odd forward gears (1, 3, 5, 7, 9, 11) are assigned to the second sub-transmission (B), which are switchable in the case of a gear shifting via the switching elements (SE-A to SE-G), wherein each of the wheel planes (RE-1 to RE-8) has a drive gear (27, 30, 33, 35, 37, 39, 43, 45) supported loosely or non-rotationally on the respective input shaft (22, 23) and, meshing therewith, a gear (28, 32, 34, 36, 38, 40, 42, 46) on the output side supported loosely or non-rotationally on the output shaft (24), which during formation of forward gears by means of switching elements (SEA to SE-G) is coupleable with or decoupleable from the respective input shaft (22, 23) and/or the output shaft (24), wherein the dual clutch transmission for the shifting of the forward gears has exactly five switching elements (SE-A to SE-D, SE-F) switchable on both sides in axial direction and at least one sixth switching element (SE-E, SE-G) switchable on one side, wherein the input shafts (22, 23) are free from non-rotational gears of the wheel planes (RE-1 to RE-8) disposed thereupon, and wherein each input shaft (22, 23) has exactly one switching element (SE-C, SE-A) switchable in axial direction on both sides, and wherein by means of the first switching element (SE-C) the first input shaft (22) is coupleable with or decoupleable from the first to fourth wheel planes (RE-1 to RE-4) of the first sub-transmission (A), and wherein by means of the second switching element (SE-A) the second input shaft (23) is coupleable with or decoupleable from the fifth to eighth wheel planes (RE-5 to RE-8) of the second sub-transmission (B), wherein the fifth wheel plane (RE-5) switchable onto both sub-transmissions (A, B) is loosely supported with its drive side gear (37) on the second input shaft (23) and by means of the third switching element (SE-D) is coupleable with the drive side hollow shaft (31) of the first sub-transmission (A), wherein the second sub-transmission (B) has the fifth wheel plane (RE-5) which directly adjoins the first sub-transmission (A) in axial direction, and wherein the fifth wheel plane (RE-5) by means of the third switching element (SE-D) is coupleable with the first sub-transmission (A), and wherein the output side gear (38) of the fifth wheel plane (RE-5) switchable onto both sub-transmissions (A, B) is supported loosely on the output shaft (24) and is coupleable via a seventh switching element (SE-G) with the output shaft (24).

2. Dual clutch transmission according to claim 1, **characterised in that** by means of the switching elements (SE-A to SE-G) exactly 12 forward gears are switchable, and/or that from the five switching element switchable on both sides, four switching elements (SE-A, SE-B, SE-D, SE-C) switchable on both sides are disposed on the input axis of the input shafts (22, 23) and one switching element (SE-F) switchable on both sides is disposed on the output shaft (24), and that the switching element (SE-E) switchable on one side is disposed on the output shaft (24).

3. Dual clutch transmission according to claim 1 or 2, **characterised in that** on the output shaft (24) are disposed at least two, maximum three switching elements (SE-F, SE-G, SE-E).

4. Dual clutch transmission according to claim 2, **characterised in that** the 3^{rd} to the 8^{th}, and the 11^{th} and 12^{th} forward gear is by means of the first to seventh switching elements (SE-A to SE-G) in each case switchable as direct gear, in the case of which when the first or second sub-transmission (A, B) is activated exactly one wheel plane is switched into the torque flow, and that the 1^{st}, 2^{nd}, 9^{th} and 10^{th} forward gear is by means of the first to seventh switching elements (SE-A to SE-G) in each case switchable as connecting gear, in the case of which when the first or second sub- transmission (A, B) is activated exactly three wheel planes are combined in sequence and switched the torque flow.

5. Dual clutch transmission according to any of the preceding claims, **characterised in that** for switching the forward gears at least two of the switching elements (SE-A to SE-G) can be operated.

6. Dual clutch transmission according to claim 1, **characterised in that** in the axial direction of the first switching element (SE-C) on its one side is disposed, supported on the first input shaft (22), a drive side loose gear (27) of the first wheel plane (RE-1) and on the other side of the first switching element (SE-C) is disposed, supported coaxially on the first input shaft (22), a drive side hollow shaft (31) of the first sub-transmission (A), which via the first switching element (SE-C) are alternatingly coupleable with the first input shaft (22), and that the drive side hollow shaft (31) of the first sub-transmission (A) bears a fixed gear (30) of the second wheel plane (RE-2) and a fixed gear (33) of the third wheel plane (RE-3).

7. Dual clutch transmission according to claim 6, **characterised in that** on the drive side hollow shaft (31) of the first sub-transmission (A) a drive side gear (35) of the fourth wheel plane (RE-4) is loosely supported, and that the drive side hollow shaft (31) is coupleable via the third switching element (SE-D) with the loosely supported drive side gear (35) of the fourth wheel plane (RE-4).

8. Dual clutch transmission according to any of the preceding claims, **characterised in that** in the axial direction of the second switching element (SE-A) of the second sub-transmission (B) on the one side of the second switching element (SE-A) is disposed, supported on the second input shaft (23), one drive side loose gear (45) of the eighth wheel plane (RE-8) and on the other side of the second switching element (SE-A) is disposed, coaxially supported on the second input shaft (23), a drive side hollow shaft (41) of the second sub-transmission (B), and that the loose gear (45) of the eighth wheel plane (RE-8) and the drive side hollow shaft (41) of the second sub-transmission (B) are coupleable via the second switching element (SE-A) alternatingly with the second input shaft (23), and that the drive side hollow shaft (41) of the second sub-transmission (B) bears at least one fixed gear (43) of the seventh wheel plane (RE-7).

9. Dual clutch transmission according to claim 8, **characterised in that** on the drive side hollow shaft (41) of the second sub-transmission (B) is loosely supported a drive side gear (39) of the sixth wheel plane (RE-6), and that the drive side hollow shaft (41) of the second sub-transmission (B) has a fourth switching element (SE-B), with which the loosely supported drive side gear (39) of the sixth wheel plane (RE-6) is coupleable with the drive side hollow shaft (41) of the second sub-transmission (B).

10. Dual clutch transmission according to claim 9, **characterised in that** the drive side gear (37) of the fifth wheel plane (RE-5) switchable onto both sub-transmissions (A, B) is coupleable by means of the fourth switching element (SE-B) with the second sub-transmission (B).

11. Dual clutch transmission according to any of the preceding claims, **characterised in that** the output side gears (28, 32) of the first and second wheel planes (RE-1, RE-2) of the first sub-transmission (A) are disposed non-rotationally on an output side hollow shaft (29) of the first sub-transmission (A), which is coaxially rotationally supported on the output shaft (24).

12. Dual clutch transmission according to claim 11, **characterised in that** the output shaft (24) has the fifth switching element (SE-F), by means of which in the first sub-transmission (A) alternatingly the output side hollow shaft (29) or an output side gear (34) of the third wheel plane (RE-3) is coupleable with the output shaft (24).

13. Dual clutch transmission according to any of the preceding claims, **characterised in that** the output side gears (42, 46) of the seventh and eighth wheel planes (RE-7, RE-8) of the second sub-transmission (B) are disposed non-rotationally on an output side hollow shaft (44) of the second sub-transmission (B), which is coaxially rotationally supported on the output shaft (24).

14. Dual clutch transmission according to claim 13, **characterised in that** the output shaft (24) has the sixth switching element (SE-E), by means of which the output side hollow shaft (44) of the second sub-transmission (B) is coupleable with the output shaft (24).

## Revendications

1. Boîte de vitesses à double embrayage pour un véhicule à moteur, comprenant des ensembles de roues dentées commutables via des éléments de commutation, qui forment exactement huit premier à huitième plans d'alignement de roues (RE-1 à RE-8) agencés l'un derrière l'autre dans l'ordre dans la direction axiale du côté d'entrée au côté de sortie de la boîte de vitesses à double embrayage, qui sont affectés respectivement à une première boîte de vitesses partielle (A) et à une seconde boîte de vitesses partielle (B), dans lesquelles la première boîte de vitesses partielle (A) présente un premier arbre d'entrée (22) et la seconde boîte de vitesses partielle (B) présente un second arbre d'entrée (23) et les deux boîtes de vitesses partielles (A, B) présentent un arbre de sortie commun (24) dont l'axe est parallèle à celui des arbres d'entrée (22, 23), dans laquelle les arbres d'entrée (22, 23) coaxiaux l'un à l'autre peuvent être activés en alternance via respectivement un embrayage à commande assistée (K1, K2) et les marches avant paires (2, 4, 6, 8, 10, 12) sont affectées à la première boîte de vitesses partielle (A) et les marches avant impaires (1, 3, 5, 7, 9, 11) à la seconde boîte de vitesses partielle (B), qui peuvent se commuter via les éléments de commutation (SE-A à SE-G) lors d'un changement de vitesses, dans laquelle chacun des plans d'alignement de roues (RE-1 à RE-8) présente une roue dentée d'entraînement (27, 30, 33, 35, 37, 39, 43, 45) montée libre ou solidaire en rotation sur l'arbre d'entrée respectif (22, 23) et une roue dentée côté sortie (28, 32, 34, 36, 38, 40, 42, 46) montée libre ou solidaire en rotation sur l'arbre de sortie (24) et en prise avec celui-ci, qui, en formant des marches avant, peut être couplée au moyen d'éléments de commutation (SE-A à SE-G) à l'arbre d'entrée respectif (22, 23) et/ou à l'arbre de sortie (24) ou en être désaccouplée, dans laquelle la boîte de vitesses à double embrayage présente pour commuter les marches avant exactement cinq premier à cinquième éléments de commutation (SE-A à SE-D, SE-F) commutables des deux côtés dans la direction axiale et au moins un sixième élément de commutation (SE-E, SE-G) commutable d'un seul côté, dans laquelle les arbres d'entrée (22, 23) sont libres de roues dentées des plans d'alignement de roues (RE-1 à RE-8) solidaires en rotation agencées sur celui-ci et dans laquelle chaque arbre d'entrée (22, 23) présente exactement un élément de commutation (SE-C, SE-A) commutable des deux côtés dans la direction axiale et dans laquelle, au moyen du premier élément de commutation (SE-C), le premier arbre d'entrée (22) peut être couplé aux premier au quatrième plans d'alignement de roues (RE-1 à RE-4) de la première boîte de vitesses partielle (A) ou en être désaccouplé et dans lequel, au moyen du deuxième élément de commutation (SE-A), le second arbre d'entrée (23) peut être couplé aux cinquième à huitième plans d'alignement de roues (RE-5 à RE-8) de la seconde boîte de vitesses partielle (B) ou en être désaccouplé, dans laquelle le cinquième plan d'alignement de roues (RE-5) commutable sur les deux boîtes de vitesses partielles (A, B) est monté libre avec sa roue dentée côté entraînement (37) sur le second arbre d'entrée (23) et peut être couplé au moyen du troisième élément de commutation (SE-D) sur l'arbre creux côté entraînement (31) de la première boîte de vitesses partielle (A), dans laquelle la seconde boîte de vitesses partielle (B) présente le cinquième plan d'alignement de roues (RE-5) avoisinant la première boîte de vitesses partielle (A) dans la direction axiale et dans laquelle le cinquième plan d'alignement de roues (RE-5) peut être couplé à la première boîte de vitesses partielle (A) au moyen du troisième élément de commutation (SE-D) et dans laquelle la roue dentée côté sortie (38) du cinquième plan d'alignement de roues (RE-5) commutable sur les deux boîtes de vitesses partielles (A, B) est montée libre sur l'arbre de sortie (24) et peut être couplée à l'arbre de sortie (24) via un septième élément de commutation (SE-G).

2. Boîte de vitesses à double embrayage selon la revendication 1, **caractérisée en ce que** l'on peut commuter exactement 12 marches avant au moyen des éléments de commutation (SE-A à SE-G) et/ou, parmi les cinq éléments de commutation commutable des deux côtés, quatre éléments de commutation commutables des deux côtés (SE-A, SE-B, SE-D, SE-C) sont agencés sur l'axe d'entrée des arbres d'entrée (22, 23) et un élément de commutation commutable des deux côtés (SE-F) est agencé sur l'arbre de sortie (24) et l'élément de commutation commutable d'un côté (SE-E) est agencé sur l'arbre de sortie (24).

3. Boîte de vitesses à double embrayage selon la revendication 1 ou 2, **caractérisée en ce qu'**au moins deux, au maximum trois éléments de commutation (SE-F, DE-G, SE-E), sont agencés sur l'arbre de sortie (24).

4. Boîte de vitesses à double embrayage selon la revendication 2, **caractérisée en ce que** les 3^{ème} à 8^{ème} et les 11^{ème} et 12^{ème} marches avant peuvent être respectivement commutées au moyen des premier à septième éléments de commutation (SE-A à SE-G) en marche directe, dans laquelle, lorsque la première ou la seconde boîte de vitesses partielle (A, B) est activée, exactement un plan d'alignement de roues est commuté dans le couple et les 1^{ère}, 2^{ème}, 9^{ème} et 10^{ème} marches avant peuvent être commutées au moyen des premier à septième éléments de commutation (SE-A à SE-G) respectivement en marche de torsion, dans laquelle, lorsque la première ou la seconde boîte de vitesses partielle (A, B) est activée, exactement trois plans d'alignement de roues sont combinés en série et sont commutés le couple.

5. Boîte de vitesses à double embrayage selon l'une quelconque des revendications précédentes, **caractérisée en ce qu'**au moins deux des éléments de commutation (SE-A à SE-G) peuvent être commandés pour commuter les marches avant.

6. Boîte de vitesses à double embrayage selon la revendication 1, **caractérisée en ce qu'**est agencée dans la direction axiale du premier élément de commutation (SE-C) sur son premier côté une roue dentée libre côté entraînement (27) du premier plan d'alignement de roues (RE-1) montée sur le premier arbre d'entrée (22) et, sur l'autre côté du premier élément de commutation (RE-1), un arbre creux côté entraînement (31) de la première boîte de vitesses partielle (A) monté coaxialement sur le premier arbre d'entrée (22), qui peuvent être couplés en alternance via le premier élément de commutation (SE-C) avec le premier arbre d'entrée (22) et l'arbre creux côté entraînement (31) de la première boîte de vitesses partielle (A) supporte une roue dentée fixe du deuxième plan de d'alignement de roues (RE-2) et une roue dentée fixe (33) du troisième plan d'alignement de roues (RE-3).

7. Boîte de vitesses à double embrayage selon la revendication 6, **caractérisée en ce qu'**est montée libre sur l'arbre creux côté entraînement (31) de la première boîte de vitesses partielle (A) une roue dentée côté entraînement (35) du quatrième plan d'alignement de roues (RE-4) et l'arbre creux côté entraînement (31) peut être couplé à la roue dentée côté entraînement montée libre (35) du quatrième plan d'alignement de roues (RE-4) via le troisième élément de commutation (SE-D).

8. Boîte de vitesses à double embrayage selon l'une quelconque des revendications précédentes, **caractérisée en ce qu'**est agencée dans la direction axiale du deuxième élément de commutation (SE-A) de la seconde boîte de vitesses partielle (B) sur le premier côté du deuxième élément de commutation (SE-A) une roue dentée libre côté entraînement (45) du huitième plan d'alignement de roues (RE-8) montée sur le second arbre d'entrée (23) et, sur l'autre côté du deuxième élément de commutation (SE-A) un arbre creux côté entraînement (41) de la seconde boîte de vitesses partielle (B) monté coaxialement sur le second arbre d'entrée (23), et la roue dentée libre (45) du huitième plan d'alignement de roues (RE-8) et l'arbre creux côté entraînement (41) de la seconde boîte de vitesses partielle (B) peuvent être couplés via le deuxième élément de commutation (SE-A) en alternance avec le second arbre d'entrée (23) et l'arbre creux côté entraînement (41) de la seconde boîte de vitesses partielle (B) supporte au moins une roue dentée fixe (43) du septième plan d'alignement de roues (RE-7).

9. Boîte de vitesses à double embrayage selon la revendication 8, **caractérisée en ce qu'**une roue dentée côté entraînement (39) du sixième plan d'alignement de roues (RE-6) est montée libre sur l'arbre creux côté entraînement (41) de la seconde boîte de vitesse partielle (B) et l'arbre creux côté entraînement (41) de la seconde boîte de vitesses partielle (B) présente un quatrième élément de commutation (SE-B) avec lequel la roue dentée côté entraînement montée libre (39) du sixième plan d'alignement de roues (RE-6) peut être couplée avec l'arbre creux côté entraînement (41) de la seconde boîte de vitesses partielle (B).

10. Boîte de vitesses à double embrayage selon la revendication 9, **caractérisée en ce que** la roue dentée côté entraînement (37) du cinquième plan d'alignement de roues (RE-5) commutable sur les deux boîtes de vitesses partielles (A, B) peut être couplée avec la seconde boîte de vitesses partielles (B) au moyen du quatrième élément de commutation (SE-B).

11. Boîte de vitesses à double embrayage selon l'une quelconque des revendications précédentes, **caractérisée en ce que** les roues dentées côté sortie (28, 32) des premier et deuxième plans d'alignement de roues (RE-1, RE-2) de la première boîte de vitesses partielle (A) sont agencées solidaires en rotation sur un arbre creux côté sortie (29) de la première boîte de vitesses partielles (A), qui est montée à rotation coaxialement sur l'arbre de sortie (24).

12. Boîte de vitesses à double embrayage selon la revendication 11, **caractérisée en ce que** l'arbre de sortie (24) présente le cinquième élément de commutation (SE-F), au moyen duquel, dans la première boîte de vitesse partielle (A), l'arbre creux côté sortie (29) ou la roue dentée côté sortie (34) du troisième plan d'alignement de roues (RE-3) peut être couplé en alternance avec l'arbre de sortie (24).

13. Boîte de vitesses à double embrayage selon l'une quelconque des revendications précédentes, **caractérisée en ce que** les roues dentée côté sortie (42, 46) du septième et du huitième plan d'alignement de roues (RE-7, RE-8) de la seconde boîte de vitesses partielles (B) sont agencées solidaires en rotation sur un arbre creux côté sortie (44) de la seconde boîte de vitesses partielle (B) qui est montée à rotation coaxialement sur l'arbre de sortie (24).

14. Boîte de vitesses à double embrayage selon la revendication 13, **caractérisée en ce que** l'arbre de sortie (24) présente le sixième élément de commutation (SE-E) au moyen duquel l'arbre creux côté sortie (44) de la seconde boîte de vitesses partielle (B) peut être couplé à l'arbre de sortie (24).
